# EUROPEAN PATENT SPECIFICATION

(11) **EP 4 265 395 B1**
(45) Date of publication and mention of the grant of the patent: **18.06.2025**
(21) Application number: 23160159.2
(22) Date of filing: 06.03.2023
(51) Int. Cl.: B29C 63/02, B29C 63/00

(54) **SCREEN PROTECTOR APPLICATOR FOR ELECTRONIC EQUIPMENT**
SCHIRMSCHUTZAPPLIKATOR FÜR ELEKTRONISCHE AUSRÜSTUNG
APPLICATEUR DE PROTECTION D'ÉCRAN POUR ÉQUIPEMENT ÉLECTRONIQUE

(30) Priority: 09.03.2022 CN 202210222182
(43) Date of publication of application: 25.10.2023
(73) Proprietor: Liang, Qidong, 524400 Lianjiang, Guangdong Province (CN)
(72) Inventor: HUANG, Hua, 528000 Foshan City,Guangdong Province (CN)
(74) Representative: Richly & Ritschel Patentanwälte PartG mbB

(56) References cited:
- EP-B1- 3 083 464
- US-A1- 2020 269 489

## Description

### FIELD OF THE INVENTION

The present invention relates to screen protector applicator technical field, more particularly, to a screen protector applicator for electronic equipment.

### BACKGROUND OF the INVENTION

Electronic devices such as mobile phones and tablets are becoming more and more widely used. In using, the screen of the electronic device is easily scratched, thereby affecting its use, and when it is fell down the ground, the screen is easily broken. In order to avoid the phenomenon, a user generally puts a screen protector on the screen.

However, in most cases, applying screen protector is proceeded by manually tearing off the outer protective layer of screen protector, then apply the screen protector. However, as the most original means of applying screen protectors, the quality of applying screen protector totally depends on the proficiency of the worker, and the screen protector is usually not properly attached and easy to stick crooked. Applying screen protector in the prior art has the deficiencies of difficult in control, low success rate, producing bubbles or not properly attached etc., which seriously affect the effect and the pasting efficiency of applying screen protector. US 2020/269489 A1 describes a packaging box of a covering film and a film applicator. By structural designs of the packaging box and the covering film, the packaging box is provided with an internal cavity matching an outer shape of an electronic device and the covering film includes a release film having an extension portion, enabling the packaging box to provide the covering film with storage, dustproof and shock-absorbing functions and to further serve as a film application auxiliary tool when a film application process is performed.

### SUMMARY OF THE INVENTION

The object of the present invention is to provide a screen protector applicator for electronic equipment to solve the deficiencies that applying screen protector manually easily forms bubble and is easy to stick crooked.

The invention is defined by the appended claims. In order to achieve the above object, the present invention provides a screen protector applicator for electronic equipment, which includes a positioning die, an adhesive parts and a flexible pulling parts. The positioning die has a positioning cavity formed by a bottom panel and a few of side panels around a periphery of the bottom panel, for positioning a screen protector and the electronic equipment. The adhesive parts is fixed on a first end of the bottom panel and a top surface of the adhesive parts is provided with an adhesive layer for sticking an end of the screen protector. The flexible pulling parts is fixed on a second end of the bottom panel. A top surface of the flexible pulling parts is provided with the other adhesive layer for sticking the other end of the screen protector, one end of the flexible pulling parts extends out of the positioning cavity.

Further, the bottom panel is also provided with a positioning step closed to the side panels, an inner surface of the positioning step contacts with the periphery of the screen protector.

Further, the top surface of the flexible pulling parts and a bottom surface thereof are provided with an adhesive layer, respectively, used for sticking the second end of the bottom panel and the other end of the screen protector, respectively.

Further, a first cavity and a second cavity are respectively provided at the first end of the bottom panel and the second end thereof. The first cavity is used for arranging the adhesive parts, the second cavity is an open structure, used for arranging the flexible pulling parts. The top surface of the adhesive parts and the top surface of the flexible pulling parts is higher than the bottom panel.

Further, the top surface of the adhesive parts is leveled with that of the flexible pulling parts, or the top surface of the adhesive parts is higher than that of the flexible pulling parts.

Further, the flexible pulling parts is made of an elastic glue with an adhesive layer.

Further, the flexible pulling parts is made of a battery tape or easy adhesive strip with some adhesive.

Further, the positioning die is also provided with a through hole through the bottom panel.

The above one or more technical schemes of the screen protector applicator for electronic equipment provided by the embodiment of the present invention have at least the following technical effects:

Before applying the screen protector, the screen protector is positioned in the positioning cavity by sticking with the adhesive parts and the flexible pulling parts, then tear off the releasing film on the screen protector.

Wipe the appearance of the electronic equipment clean and make the screen of the electronic equipment face up, cover the positioning die on the electronic equipment so that the electronic equipment is positioned in the positioning cavity and the screen protector contacts with the screen of the electronic equipment. Press the end of the positioning die, then pull the flexible pulling parts outward, because the top surface of the flexible pulling parts is provided with the other adhesive layer, under the adhesive force of the other adhesive layer, the flexible pulling parts, which is pulled outwards, will slowly detach from the screen protector and the bottom panel, thereby the screen protector gradually attaches to the screen of the electronic equipment from one end, thereby expelling the air between the screen protector and the screen so that the screen protector is tightly fitted to the screen of the electronic equipment. The screen protector and the electronic equipment are positioned by the positioning cavity which can ensure the positional accuracy of the screen protector on the screen.

Using the screen protector applicator for electronic equipment, it is not only simple operation, but also no demand for applying screen protector techniques, and after apply the screen protector, the screen protector and the screen is highly consistence, no bubbles form.

### BRIEF DESCRIPTION OF THE DRAWINGS

In order to more clearly illustrate the technical schemes in the embodiments in the present invention, the drawings needed in the embodiments or the prior technical description are briefly introduced below. Obviously, the drawings described below are only some embodiments in the present invention, and for those skilled in the art, additional drawings may be obtained according to the drawings below without creative work.
Fig. 1 is a perspective view of the screen protector applicator for electronic equipment according to an embodiment in the present invention ;
Fig. 2 is the other perspective view of the screen protector applicator for electronic equipment according to an embodiment in the present invention ;
Fig. 3 is an explosive perspective view of the screen protector applicator for electronic equipment according to an embodiment in the present invention ;
Fig. 4 is a perspective view of the position die of the screen protector applicator for electronic equipment according to an embodiment in the present invention ;
Fig. 5 is another perspective view of the screen protector applicator for electronic equipment according to an embodiment in the present invention ;
Fig. 6 is another perspective view of the screen protector applicator for electronic equipment according to an embodiment in the present invention.

### DETAILED DESCRIPTION OF ILLUSTRATED EMBODIMENTS

In order to make the invention purpose, the technical scheme and the technical effect more clearly be understood, the invention is further explained in combination with the concrete embodiment below. It should be understood that the specific embodiments described herein are only used to interpret the invention and are not used to limit the invention.

In the description of the embodiments of the present invention, it should be understood that the directional indications involved in the embodiments, such as the "upper", "lower", "left", "right", "front", "rear", "internal" and "external", indicating orientation or location relationship, are based on the orientation or position relationship showed in the figures. These directional indications are only for describing the embodiments in the present invention and simplifying the description, rather than indicating or implying that the device or the element must be constructed and operated in a specified azimuth, which cannot be understood as a limitation of the present invention.

Further, the terms "first" , and "second" are used only for description purposes, and cannot be understood as indicating or implying relative importance or implicitly indicating the number of technical features indicated. Thus, features defining "first" and "second" may expressly or implicitly include one or more of the features. In the description of the embodiments of the present invention, the "plurality of " means two or more unless otherwise specifically limits.

In the embodiments of the invention, unless otherwise clearly specified and defined, the terms, "installed", "connected", "or" fixed " should be generally understood, for example, a fixed connection, or a removable connection, a mechanical connection or an electrical connection, or an directly connection or an indirectly connection through an intermediate media, or a connection within two elements or the interaction of two elements. For those of ordinary skilled in the art, the specific meaning of the above terms in the embodiment of the present invention may be understood under specific circumstances.

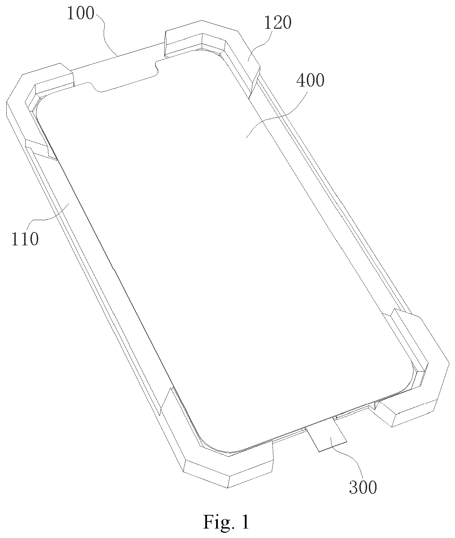

Referring to Fig. 1-4, a screen protector applicator for electronic equipment, using for applying the screen protector on the screen of the electronic equipment, includes a positioning die100, an adhesive parts 200 and a flexible pulling parts 300. The positioning die 100 has a positioning cavity 101, which is formed by a bottom panel 110 and a few of side panels 120 around the periphery of the bottom panel 110. for positioning a screen protector 400 and the electronic equipment. The adhesive parts 200 is fixed on a first end of the bottom panel110 and a top surface of the adhesive parts 200 is provided with an adhesive layer for sticking an end of the screen protector 400 covered with a releasing film. The flexible pulling parts 300 is fixed on the second end of the bottom panel 100. A top surface of the flexible pulling parts 300 is provided with the other adhesive layer for sticking the other end of the screen protector 400, one end of the flexible pulling parts 300 extends out of the positioning cavity 101.

Before applying the screen protector 400, the screen protector 400 is positioned in the positioning cavity 101 by sticking with the adhesive parts 200 and the flexible pulling parts 300, then tear off the releasing film on the screen protector 400.

Wipe the appearance of the electronic equipment clean and make the screen of the electronic equipment face up, cover the positioning die 100 on the electronic equipment so that the electronic equipment is positioned in the positioning cavity 101 and the screen protector 400 contacts with the screen of the electronic equipment. Press the end of the positioning die 100, then pull the flexible pulling parts 300 outward, because the top surface of the flexible pulling parts 300 is provided with the other adhesive layer, under the adhesive force of the other adhesive layer, the flexible pulling parts 300, which is pulled outwards, will slowly detach from the screen protector 400 and the bottom panel 110, thereby the screen protector 400 gradually attaches to the screen of the electronic equipment from one end, thereby expelling the air between the screen protector 400 and the screen so that the screen protector 400 is tightly fitted to the screen of the electronic equipment. The screen protector 400 and the electronic equipment are positioned by the positioning cavity 101 which can ensure the positional accuracy of the screen protector 400 on the screen.

Using the screen protector applicator for electronic equipment, it is not only simple operation, but also no demand for applying screen protector techniques, and after apply the screen protector, the screen protector and the screen is highly consistence, no bubbles form.

Further, referring to Fig. 1-4, the screen protector 400 can attached in the positioning cavity 101 during producing process. Specifically, in the producing process, the adhesive parts 200 is attached to or forms on the bottom panel 110, the flexible pulling parts 300 is attached to the other end of the screen protector 400, or the flexible pulling parts 300 is attached to the second end of the bottom panel 110, and the end of the flexible pulling parts 300 extends out of the positioning cavity 101, then the screen protector 400 is attached to the adhesive parts 200. When applying the screen protector 400, it is only necessary to tear off the other releasing film on the screen protector 400 to realize the application of the screen protector 400. The application of the screen protector 400 is more simple. And the screen protector 400 is positioned in the screen protector applicator when it is produced, thereby ensuring the positioning accuracy of the screen protector 400, and improving the quality of applying the screen protector 400.

Further, referring to Fig. 1-4, when it is required to apply the screen protector 400, the user attaches the screen protector 400 into the positioning cavity 101. The user can choose the screen protector 400 with qualities and different performance. Specifically, the adhesive parts 200 can be arranged in the bottom panel 110 when it is produced, it also can be attached to the bottom panel 110 before being applied by the users. Whether the screen protector 400 is arranged in the positioning cavity 101 during production, or the screen protector 400 is arranged in the positioning cavity 101 by the user, it is only different in production form, no substantial difference, both are in the protection range of the present invention.

Further, referring to Fig. 1-4, the bottom panel 110 is also provided with a positioning step 130 closed to the side panels 120. In the embodiment, when the screen protector 400 is attached into the positioning cavity 101, an inner surface of the positioning step 130 contacts with the periphary of the screen protector 400, thereby positioning the screen protector 400 in the positioning cavity 101.

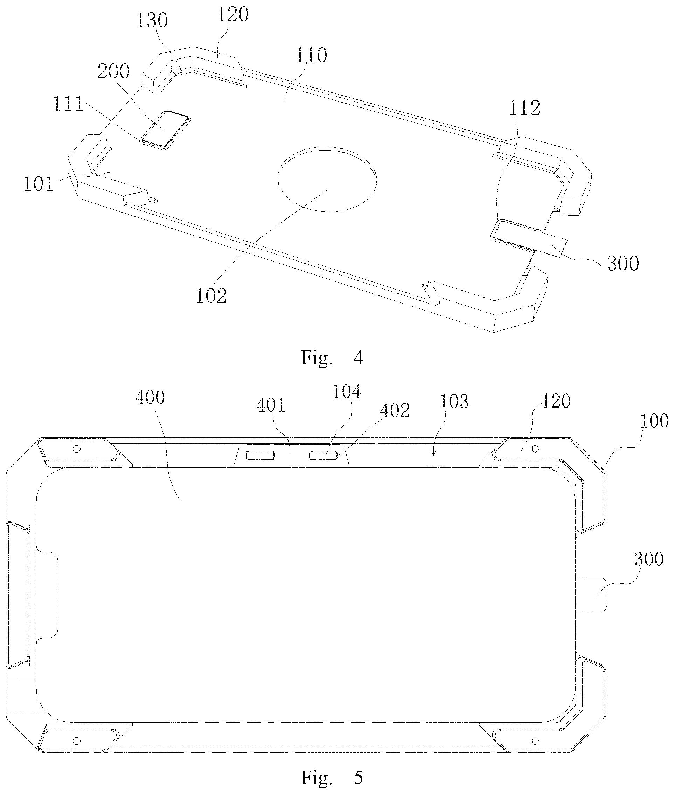

Further, in another embodiment for increasing the positioning effect of the screen protector 400, referring to Fig. 5, a periphery of the releasing film extends at least an extending part 401, the extending part 401 is provided with at least two positioning holes 402, a breach 103 is provided between two of the side panels 120, used for containing the extending part 401. At least two positioning columns 104 extend upward from the breach 103 and pass through the two positioning holes 402, thereby positioning the screen protector 400.

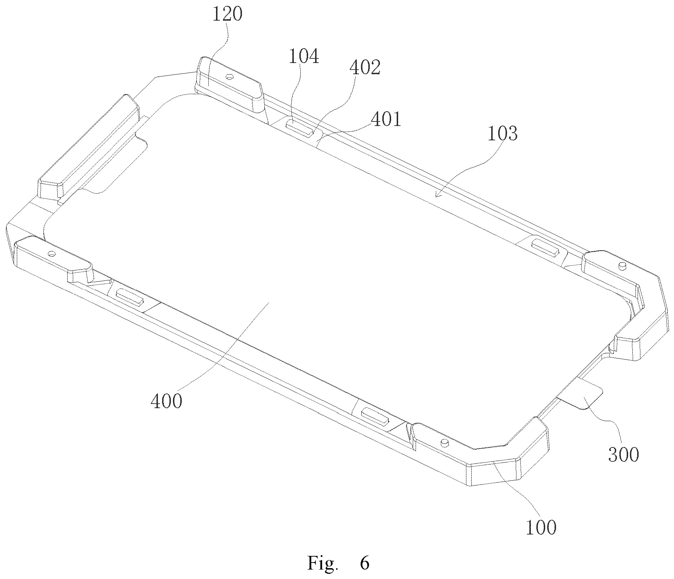

Further, referring to Fig. 6, it is provided with another embodiment about the positioning holes 402 and the positioning columns 104. The the releasing film extends two extending parts 401, which can be arranged on the same side edge or different side edges thereof. Each of the two extending parts 401 is provided with at least two positioning holes 402. Two of the breaches 103, corresponding to each of the two extending parts 401 are provided between two of the side panels 120. At least two positioning columns 104 extend upward from the breach 103 and pass through the two positioning holes 402, thereby positioning the screen protector 400 with higher accuracy, further improving the accuracy of the screen protector 400.

Further, referring to Fig. 1-4, a top surface of the flexible pulling parts 300 and a bottom surface thgereof are provided with an adhesive layer respectively, used for adhesive the other end of the bottom panel 110 and the second end of the screen protector 400. In the embodiment, the other end of the screen protector 400 is fixed by the flexible pulling parts 300 so as to increase a stability of the screen protector 400 in the position cavity 101 and increase a resistance to pull the flexible pulling parts 300 outwards, thereby extending time of pulling the flexible pulling parts 300 so that the screen protector 400 has enough time to expel the air between the screen protector 400 and the screen of the electronic equipment, which improves the quality of applying the screen protector 400.

Further, referring to Fig. 1-4, a first cavity 111 and a second cavity 112 are respectively provided at the first end of the bottom panel 110 and the second end thereof. The first cavity 111 is used for arranging the adhesive parts 200, the second cavity 112 is an open structure, used for arranging the flexible pulling parts 300. One end of the flexible pulling parts 300 can extends out of the second cavity 112. The top surface of the adhesive parts 200 and the top surface of the flexible pulling parts 300 is higher than the bottom panel 110. In the embodiment, when the screen protector 400 is arranged in the positioning cavity 101, it can be adhesive in the positioning cavity 101 by the adhesive parts 200 and the flexible pulling parts 300. And when press the positioning die 100, the adhesive parts 200 extrudes the screen protector 400 to attach to the screen, thereby the screen protector 400 gradually discharges the air from the extrusion area and attaches to the screen, further avoid the bubble formation after apply the screen protector 400.

Further, referring to Fig. 1-4, the top surface of the adhesive parts 200 is leveled with that of the flexible pulling parts 300, or the top surface of the adhesive parts 200 is higher than that of the flexible pulling parts 300. In the embodiment, when the positioning die 100 covers the electrical equipment, and press the end, closed to the adhesive parts 200, of the positioning die 100, only the pressed part of the screen protector 400 is attached to the screen, the left part is not attached to the screen, therefor, when pulling the flexible pulling parts 300, the screen protector 400 can gradually discharge the air and attach to the screen.

Further, referring to Fig. 1-4, the flexible pulling parts 300 is made of an elastic glue with an adhesive layer. In the embodiment, the flexible pulling parts 300 is pulled, it produces elastic deformation and is gradually elongated, thereby increasing the contacting area of the adhesive layer and the screen protector 400. When pulling to a certain degree, the flexible pulling parts 300 departs from the screen protector 400.

Further, referring to Fig. 1-4, the flexible pulling parts 300 is made of a battery tape or easy adhesive strip with some adhesive. After being pulled, no adhesive material remains on the screen protector 400, which ensures the quality of applying the screen protector 400. The battery tape or the easy adhesive strip is commonly used materials in the market and belongs to the existing materials, so their specific parameters are not detailed in this embodiment.

Further, the positioning die 100 is also provided with a through hole 102 through the bottom panel 110. In the embodiment, the screen protector 400 is attached to the screen, it can be pressed through the through hole 102 so that the pressed part of the screen protector 400 better fits the screen, and when pulls the flexible pulling parts 300, press the screen protector 400 so that one end of the screen protector 400 suffers the pressure force, the other end of the screen protector 400 suffers a pulling force, thereby the screen protector 400 can better fit the screen. After applying the screen protector 400, the screen protector 400 can be pressed through the through hole 102 to separate the positioning die 100 and the screen protector 400.

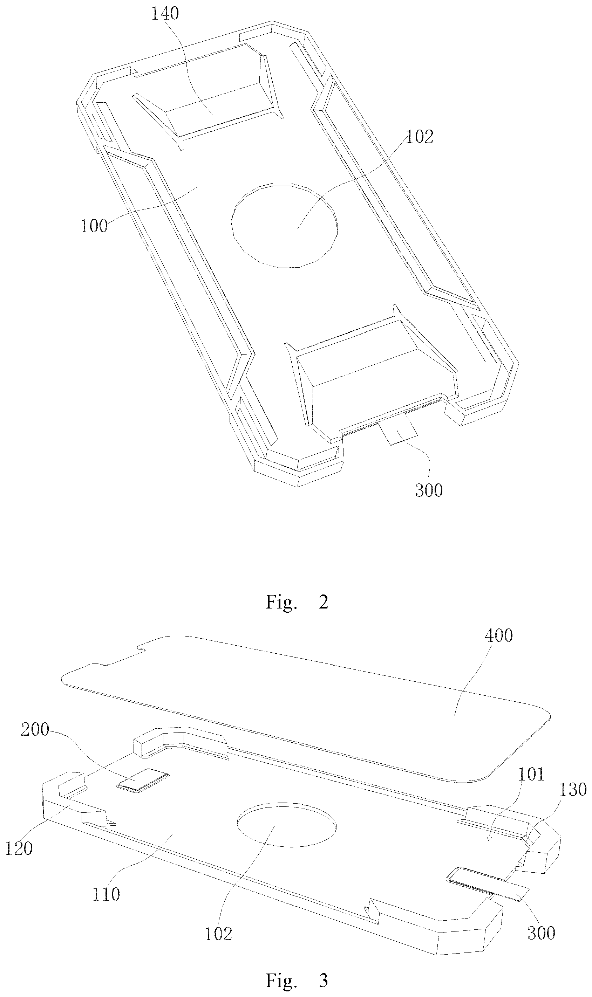

Further, referring to Fig. 2, in order to cover the positioning die 100 on the electrical equipment, the bottom surface of the positioning die 100 is provided with two exprotruding handheld portions 140 at opposited two ends. Each of the exprotruding handheld portions 140 has four inclined slopes. The users can press the inclined slopes with two hands so that the positioning die 100 can be pressed on the electrical equipment.

The following methods illustrate the invention, but are not part of the invention: A method of applying the screen protector for electronic equipment, referring to Fig. 1-Fig. 4, the adhesive parts 200 adhesives the screen protector 400 in the positioning cavity 101, then tear off the releasing film on the surface, facing to the screen, of the screen protector 400, covers the positioning die 100 on the electrical equipment, so that the screen protector 400 attaches to the screen. Press the positioning die 100 or do it through the through hole 102, and pull gradually the flexible pulling parts 300, so that the air between the screen protector 400 and the screen is gradually discharged, and the screen protector 400 attaches on the screen.

The other method of applying the screen protector for electronic equipment, referring to Fig. 1-Fig. 4, the adhesive parts 200 and the flexible pulling parts 300 are respectively sticking the first end of the bottom surface 100 and the second end thereof. The screen protector 400 sticks the adhesive parts 200 and the flexible pulling parts 300. Tear off the releasing film on the surface, facing to the screen, of the screen protector 400 tears off, cover the positioning die 100 on the electrical equipment, press the positioning die 100 or do it through the through hole 102, and pull gradually the flexible pulling parts 300, so that the air between the screen protector 400 and the screen is gradually discharged, and the screen protector 400 attaches on the screen.

## Claims

1. A screen protector applicator for electronic equipment, wherein comprising a positioning die (100), an adhesive part (200) and a flexible pulling part (300); said positioning die (100) has a positioning cavity (101) formed by a bottom panel (110) and a few of side panels (120) around a periphery of the bottom panel (110), for positioning a screen protector (400) and said electronic equipment; **characterized in that** said adhesive part (200) is fixed on a first end of said bottom panel (110) and a top surface of said adhesive part (200) is provided with an adhesive layer for sticking an end of said screen protector (400); said flexible pulling part (300) is fixed on a second end of said bottom panel (110); a top surface of said flexible pulling part (300) is provided with the other adhesive layer for sticking the other end of said screen protector (400), one end of said flexible pulling part (300) extends out of said positioning cavity (101).

2. The screen protector applicator for electronic equipment according to claim 1, wherein said bottom panel (110) is also provided with a positioning step closed to said side panels (120), an inner surface of said positioning step contacts with a periphery of said screen protector (400).

3. The screen protector applicator for electronic equipment according to claim 1, wherein said top surface of said flexible pulling part (300) and a bottom surface thereof are provided with an adhesive layer respectively, used for adhesive said second end of said bottom panel (110) and said other end of said screen protector (400), respectively.

4. The screen protector applicator for electronic equipment according to claim 2, wherein said top surface of said flexible pulling part (300) and a bottom surface thereof are provided with an adhesive layer respectively, used for adhesive said second end of said bottom panel (110) and said screen protector (400), respectively.

5. The screen protector applicator for electronic equipment according to claim 1, wherein a first cavity and a second cavity are respectively provided at said first end of the bottom panel (110) and said second end thereof; said first cavity is used for arranging said adhesive part (200), said second cavity is an open structure, used for arranging said flexible pulling part (300); said top surface of said adhesive part (200) and said top surface of said flexible pulling part (300) is higher than said bottom panel (110).

6. The screen protector applicator for electronic equipment according to claim 2, wherein a first cavity and a second cavity are respectively provided at said first end of the bottom panel (110) and said second end thereof; said first cavity is used for arranging said adhesive part (200), said second cavity is an open structure, used for arranging said flexible pulling part (300); said top surface of said adhesive part (200) and said top surface of said flexible pulling part (300) is higher than said bottom panel (110).

7. The screen protector applicator for electronic equipment according to claim 1, wherein said top surface of said adhesive part (200) is leveled with that of said flexible pulling part (300), or said top surface of said adhesive part (200) is higher than that of said flexible pulling part (300).

8. The screen protector applicator for electronic equipment according to claim 2, wherein said top surface of said adhesive part (200) is leveled with that of said flexible pulling part (300), or said top surface of said adhesive part (200) is higher than that of said flexible pulling part (300).

9. The screen protector applicator for electronic equipment according to claim 1, wherein said flexible pulling part (300) is made of an elastic glue with an adhesive layer.

10. The screen protector applicator for electronic equipment according to claim 9, wherein said flexible pulling part (300) is made of a battery tape or an easy adhesive strip with some adhesive..

11. The screen protector applicator for electronic equipment according to claim 1, wherein said positioning die (100) is also provided with a through hole through said bottom panel (110).

12. The screen protector applicator for electronic equipment according to claim 1, wherein said screen protector (400) has a release film, a periphery of said releasing film extends at least an extending part, said extending part is provided with at least two positioning holes, a breach is provided between two of said side panels (120), used for containing said extending part; at least two positioning columns extend upward from said breach and pass through said two positioning holes, thereby positioning said screen protector (400).

13. The screen protector applicator for electronic equipment according to claim 1, wherein said screen protector (400) has a release film, opposited two sides of said releasing film extend respectively at least an extending part, each said extending part is provided with at least a positioning hole; between two of said side panels (120) is disposed a breach for containing said corresponding extending part; said breach is provided with a positioning column passing through said positioning hole, thereby positioning said screen protector (400).

## Patentansprüche

1. Bildschirmschutzapplikator für ein elektronisches Gerät, umfassend eine Positionierungsform (100), ein Klebeteil (200) und ein flexibles Zugteil (300); wobei die Positionierungsform (100) einen Positionierungshohlraum (101) aufweist, der durch eine Bodenplatte (110) und einige Seitenplatten (120) um einen Umfang der Bodenplatte (110) herum ausgebildet wird, zum Positionieren eines Bildschirmschutzes (400) und des elektronischen Geräts;
**dadurch gekennzeichnet, dass** das Klebeteil (200) an einem ersten Ende der Bodenplatte (110) befestigt ist und eine obere Oberfläche des Klebeteils (200) mit einer Klebeschicht zum Aufkleben eines Endes des Bildschirmschutzes (400) versehen ist; das flexible Zugteil (300) an einem zweiten Ende der Bodenplatte (110) befestigt ist; eine obere Oberfläche des flexiblen Zugteils (300) mit der anderen Klebeschicht zum Aufkleben des anderen Endes des Bildschirmschutzes (400) versehen ist, wobei ein Ende des flexiblen Zugteils (300) aus dem Positionierungshohlraum (101) vorsteht.

2. Bildschirmschutzapplikator für ein elektronisches Gerät nach Anspruch 1, wobei die Bodenplatte (110) ebenso mit einer Positionierungsstufe geschlossen an den Seitenplatten (120) versehen ist, wobei eine Innenoberfläche der Positionierungsstufe mit einem Umfang des Bildschirmschutzes (400) in Kontakt steht.

3. Bildschirmschutzapplikator für ein elektronisches Gerät nach Anspruch 1, wobei die obere Oberfläche des flexiblen Zugteils (300) und eine Bodenoberfläche davon jeweils mit einer Klebeschicht versehen sind, die zum Verkleben des zweiten Endes der Bodenplatte (110) beziehungsweise des anderen Endes des Bildschirmschutzes (400) verwendet wird.

4. Bildschirmschutzapplikator für ein elektronisches Gerät nach Anspruch 2, wobei die obere Oberfläche des flexiblen Zugteils (300) und eine Bodenoberfläche davon jeweils mit einer Klebeschicht versehen sind, die zum Verkleben des zweiten Endes der Bodenplatte (110) beziehungsweise des Bildschirmschutzes (400) verwendet wird.

5. Bildschirmschutzapplikator für ein elektronisches Gerät nach Anspruch 1, wobei an dem ersten Ende der Bodenplatte (110) und an dem zweiten Ende davon ein erster Hohlraum beziehungsweise ein zweiter Hohlraum vorgesehen sind; der erste Hohlraum zum Anordnen des Klebeteils (200) verwendet wird, der zweite Hohlraum eine offene Struktur ist, die zum Anordnen des flexiblen Zugteils (300) verwendet wird; die obere Oberfläche des Klebeteils (200) und die obere Oberfläche des flexiblen Zugteils (300) höher als die Bodenplatte (110) ist.

6. Bildschirmschutzapplikator für ein elektronisches Gerät nach Anspruch 2, wobei an dem ersten Ende der Bodenplatte (110) und an dem zweiten Ende davon ein erster Hohlraum beziehungsweise ein zweiter Hohlraum vorgesehen sind; der erste Hohlraum zum Anordnen des Klebeteils (200) verwendet wird, der zweite Hohlraum eine offene Struktur ist, die zum Anordnen des flexiblen Zugteils (300) verwendet wird; die obere Oberfläche des Klebeteils (200) und die obere Oberfläche des flexiblen Zugteils (300) höher als die Bodenplatte (110) ist.

7. Bildschirmschutzapplikator für ein elektronisches Gerät nach Anspruch 1, wobei die obere Oberfläche des Klebeteils (200) auf gleicher Höhe mit der des flexiblen Zugteils (300) ist oder die obere Oberfläche des Klebeteils (200) höher als die des flexiblen Zugteils (300) ist.

8. Bildschirmschutzapplikator für ein elektronisches Gerät nach Anspruch 2, wobei die obere Oberfläche des Klebeteils (200) auf gleicher Höhe mit der des flexiblen Zugteils (300) ist oder die obere Oberfläche des Klebeteils (200) höher als die des flexiblen Zugteils (300) ist.

9. Bildschirmschutzapplikator für ein elektronisches Gerät nach Anspruch 1, wobei das flexible Zugteil (300) aus einem elastischen Kleber mit einer Klebeschicht hergestellt ist.

10. Bildschirmschutzapplikator für ein elektronisches Gerät nach Anspruch 9, wobei das flexible Zugteil (300) aus einem Batterieband oder einem leicht zu klebenden Streifen mit etwas Klebstoff besteht.

11. Bildschirmschutzapplikator für ein elektronisches Gerät nach Anspruch 1, wobei die Positionierungsform (100) ebenso mit einem Durchgangsloch durch die Bodenplatte (110) versehen ist.

12. Bildschirmschutzapplikator für ein elektronisches Gerät nach Anspruch 1, wobei der Bildschirmschutz (400) eine Trennfolie aufweist, sich ein Umfang der Trennfolie über mindestens einen sich erstreckenden Teil erstreckt, der sich erstreckende Teil mit mindestens zwei Positionierungslöchern versehen ist, zwischen zwei der Seitenplatten (120) einen Spalt bereitgestellt ist, der zum Aufnehmen des sich erstreckenden Teils verwendet wird; sich mindestens zwei Positionierungssäulen von dem Spalt nach oben erstrecken und durch die zwei Positionierungslöcher passieren, wodurch der Bildschirmschutz (400) positioniert wird.

13. Bildschirmschutzapplikator für ein elektronisches Gerät nach Anspruch 1, wobei der Bildschirmschutz (400) eine Trennfolie aufweist, sich zwei gegenüberliegende Seiten der Trennfolie jeweils über mindestens einen sich erstreckenden Teil erstrecken und jeder sich erstreckende Teil mit mindestens einem Positionierungsloch versehen ist; zwischen zwei der Seitenplatten (120) ein Spalt zum Aufnehmen des entsprechenden sich erstreckenden Teils angeordnet ist; der Spalt mit einer Positionierungssäule versehen ist, die durch das Positionierungsloch passiert, wobei dadurch der Bildschirmschutz (400) positioniert wird.

## Revendications

1. Applicateur de protecteur d'écran pour équipement électronique, dans lequel il comprend une matrice de positionnement (100), une partie adhésive (200) et une partie flexible de traction (300) ; ladite matrice de positionnement (100) a une cavité de positionnement (101) formée par un panneau inférieur (110) et quelques panneaux latéraux (120) autour d'une périphérie du panneau inférieur (110), pour positionner un protecteur d'écran (400) et ledit équipement électronique ; **caractérisé en ce que** ladite partie adhésive (200) est fixée sur une première extrémité dudit panneau inférieur (110) et qu'une surface supérieure de ladite partie adhésive (200) est pourvue d'une couche adhésive pour coller une extrémité dudit protecteur d'écran (400) ; ladite partie de traction flexible (300) est fixée à une seconde extrémité dudit panneau inférieur (110) ; une surface supérieure de ladite partie de traction flexible (300) est pourvue de l'autre couche adhésive pour coller l'autre extrémité dudit protecteur d'écran (400), une extrémité de ladite partie de traction flexible (300) s'étend hors de ladite cavité de positionnement (101).

2. Applicateur de protecteur d'écran pour équipement électronique selon la revendication 1, dans lequel ledit panneau inférieur (110) est également pourvu d'une étape de positionnement fermée aux panneaux latéraux (120), une surface intérieure de ladite étape de positionnement entre en contact avec une périphérie du protecteur d'écran (400).

3. Applicateur de protecteur d'écran pour équipement électronique selon la revendication 1, dans lequel ladite surface supérieure de ladite partie de traction flexible (300) et une surface inférieure de celle-ci sont pourvues d'une couche adhésive respectivement, utilisée pour coller ladite seconde extrémité dudit panneau inférieur (110) et ladite autre extrémité dudit protecteur d'écran (400), respectivement.

4. Applicateur de protecteur d'écran pour équipement électronique selon la revendication 2, dans lequel ladite surface supérieure de ladite partie de traction flexible (300) et une surface inférieure de celle-ci sont pourvues d'une couche adhésive, respectivement, utilisée pour coller ladite seconde extrémité dudit panneau inférieur (110) et ledit protecteur d'écran (400), respectivement.

5. Applicateur de protecteur d'écran pour équipement électronique selon la revendication 1, dans lequel une première cavité et une seconde cavité sont respectivement prévues à ladite première extrémité du panneau inférieur (110) et à ladite seconde extrémité de celui-ci ; ladite première cavité est utilisée pour disposer ladite partie adhésive (200), ladite seconde cavité est une structure ouverte, utilisée pour disposer ladite partie flexible de traction (300) ; ladite surface supérieure de ladite partie adhésive (200) et ladite surface supérieure de ladite partie flexible de traction (300) est plus haute que ledit panneau inférieur (110).

6. Applicateur de protecteur d'écran pour équipement électronique selon la revendication 2, dans lequel une première cavité et une seconde cavité sont respectivement prévues à ladite première extrémité du panneau inférieur (110) et à ladite seconde extrémité de celui-ci ; ladite première cavité est utilisée pour disposer ladite partie adhésive (200), ladite seconde cavité est une structure ouverte, utilisée pour disposer ladite partie flexible de traction (300) ; ladite surface supérieure de ladite partie adhésive (200) et ladite surface supérieure de ladite partie flexible de traction (300) est plus haute que ledit panneau inférieur (110).

7. Applicateur de protecteur d'écran pour équipement électronique selon la revendication 1, dans lequel ladite surface supérieure de ladite partie adhésive (200) est au même niveau que celle de ladite partie de traction flexible (300), ou ladite surface supérieure de ladite partie adhésive (200) est plus élevée que celle de ladite partie de traction flexible (300).

8. Applicateur de protection d'écran pour équipement électronique selon la revendication 2, dans lequel ladite surface supérieure de ladite partie adhésive (200) est au même niveau que celle de ladite partie de traction flexible (300), ou ladite surface supérieure de ladite partie adhésive (200) est plus élevée que celle de ladite partie de traction flexible (300).

9. Applicateur de protecteur d'écran pour équipement électronique selon la revendication 1, dans lequel ladite partie de traction flexible (300) est constituée d'une colle élastique avec une couche adhésive.

10. Applicateur de protecteur d'écran pour équipement électronique selon la revendication 9, dans lequel ladite partie de traction flexible (300) est constituée d'une bande de batterie ou d'une bande adhésive facile avec un peu d'adhésif.

11. Applicateur de protecteur d'écran pour équipement électronique selon la revendication 1, dans lequel ladite matrice de positionnement (100) est également pourvue d'un trou traversant ledit panneau inférieur (110).

12. Applicateur de protecteur d'écran pour équipement électronique selon la revendication 1, dans lequel ledit protecteur d'écran (400) a un film de séparation, une périphérie dudit film de séparation s'étend au moins sur une partie d'extension, ladite partie d'extension est pourvue d'au moins deux trous de positionnement, une brèche est prévue entre deux desdits panneaux latéraux (120), utilisés pour contenir ladite partie d'extension ; au moins deux colonnes de positionnement s'étendent vers le haut à partir de ladite brèche et passent à travers lesdits deux trous de positionnement, positionnant ainsi ledit protecteur d'écran (400).

13. Applicateur de protecteur d'écran pour équipement électronique selon la revendication 1, dans lequel ledit protecteur d'écran (400) a un film de séparation, deux côtés opposés dudit film de séparation s'étendent respectivement sur au moins une partie d'extension, chaque dite partie d'extension étant pourvue d'au moins un trou de positionnement ; entre deux desdits panneaux latéraux (120) est disposée une brèche destinée à contenir ladite pièce d'extension correspondante ; ladite brèche est pourvue d'une colonne de positionnement passant par ledit trou de positionnement, ce qui permet de positionner ledit protecteur d'écran (400).
